# EUROPÄISCHE PATENTSCHRIFT

(11) **EP 2 475 562 B1**
(45) Veröffentlichungstag und Bekanntmachung des Hinweises auf die Patenterteilung: **11.09.2019**
(21) Anmeldenummer: 10740153.1
(22) Anmeldetag: 09.07.2010
(51) Int. Cl.: B60T 15/18, F15B 21/00

(54) **RELAISVENTILEINRICHTUNG**
RELAY VALVE DEVICE
DISPOSITIF DE VALVE-RELAIS

(30) Priorität: 09.09.2009 DE 102009040759
(43) Veröffentlichungstag der Anmeldung: 18.07.2012
(73) Patentinhaber: WABCO GmbH, 30453 Hannover (DE)
(72) Erfinder: FUHRMANN, Ingo, 30855 Langenhagen (DE); GENSINK, Jan, 30826 Garbsen (DE); STEINFELD, Dieter, 30455 Hannover (DE)
(74) Vertreter: Lauerwald, Jörg
(86) Internationale Anmeldenummer: PCT/EP2010/004202
(87) Internationale Veröffentlichungsnummer: WO 2011/029495

(56) Entgegenhaltungen:
- EP-A1- 1 391 363
- DE-A1- 3 515 386

## Beschreibung

Die Erfindung betrifft eine Relaisventileinrichtung gemäß dem Oberbegriff des Patentanspruchs 1.

Eine gattungsgemäße Relaisventileinrichtung ist aus der DE 35 15 386 A1 und der EP 1 391 363 A1 bekannt.

Bei der bekannten Relaisventileinrichtung ist in einer Auslasskammer eine Zwischenwand angeordnet, die den Relaiskolben gegen ausgesteuerten Druck abschirmt und die Auslasskammer in eine relaiskolbenseitige Kammer und eine Relaiskolben-abgewandte Relaisarbeitskammer teilt. Die Zwischenwand weist eine Öffnung auf, die zum Druckausgleich zwischen der relaiskolbenseitigen Kammer und der Relaisarbeitskammer dient.

Die erwähnte Ausbildung der Relaisventileinrichtung mit der Zwischenwand und der darin vorgesehenen Öffnung erlaubt ein verbessertes dynamisches regeltechnisches Verhalten der Relaisventileinrichtung und vermeidet die Gefahr von Schwingungen des Relaiskolbens. Durch die verhältnismäßig kleine Öffnung in der Zwischenwand zum Druckausgleich wird der Druckausgleich in gewünschter Weise zeitlich verzögert. Hierdurch wird eine Phasenanhebung der internen Gegenkopplung im Relaisventil erzeugt. Der ausgesteuerte Bremsdruck wird über die Öffnung in der Zwischenwand zeitlich verzögert, d. h. zeitversetzt auf den Relaiskolben gegeben. Hierdurch entsteht eine Phasenverschiebung der Druckschwingungen zwischen dem Relaiskolben und dem mit dem Bremszylinder verbundenen Relaisarbeitsraum, was zur Unterdrückung der Kolbeneigenschwingung des Relaiskolbens führt.

Die bekannte Relaisventileinrichtung hat sich hinsichtlich ihrer Funktion gut bewährt. Der vorliegenden Erfindung liegt die Aufgabe zugrunde, die Relaisventileinrichtung in fertigungstechnischer Hinsicht zu optimieren.

Diese Aufgabe wird durch die in dem Patentanspruch 1 angegebene Erfindung gelöst. Vorteilhafte Weiterbildungen der Erfindung sind in den Unteransprüchen angegeben.

Die Erfindung hat den Vorteil, die benötigte Anzahl von Einzelteilen zum Aufbau der Relaisventileinrichtung zu verringern. Erfindungsgemäß sind zwei Teile der Relaisventileinrichtung, die für verschiedene Funktionen vorgesehen sind, nämlich der Ventilsitz einer in der Relaisventileinrichtung angeordneten Arbeitsventileinrichtung sowie die Zwischenwand zu einem Teil integriert, das einstückig als kombinierte Zwischenwand-Ventilsitzeinrichtung ausgebildet ist. Hierdurch kann die erfindungsgemäße Relaisventileinrichtung kostengünstiger hergestellt und einfacher montiert werden. Zudem ergeben sich erst durch die Integration der zwei Funktionen in einem Teil weitere vorteilhafte Optimierungsmöglichkeiten, die nachfolgend im Zusammenhang mit den Unteransprüchen erläutert werden.

Mit der Erfindung wird vorteilhaft die die Montage der bekannten Zwischenwand, die gemäß EP 1 391 363 A1 z. B. als separat in der Relaisventileinrichtung zu montierendes Prallblech ausgeführt werden konnte, deutlich vereinfacht.

Ein weiterer Vorteil der Erfindung besteht darin, dass durch die gedämpfte Druckweiterleitung über die Zwischenwand und die darin vorgesehene Einrichtung zum Druckausgleich zwischen der relaiskolbenseitigen Kammer und der Relaisarbeitskammer die erfindungsgemäße Relaisventileinrichtung auf einfache Weise bei Systemen mit getakteter Drucksteuerung verwendet werden kann, z. B. bei elektronisch gesteuerten Bremsanlagen (EBS) für Nutzfahrzeuge. Durch die erwähnte Dämpfung werden aufgrund der Taktung entstehende Pulsationen des Drucks gedämpft in die relaiskolbenseitige Kammer abgegeben, sodass es nicht zum Schwingen des Relaiskolbens kommt.

Gemäß der Erfindung ist die kombinierte Zwischenwand-Ventilsitzeinrichtung als Kunststoffteil hergestellt. Dies erlaubt eine kostengünstige Herstellung sowie eine Gewichtseinsparung. Die Möglichkeit einer Herstellung aus Kunststoff wird erst durch die Integration der bisherigen, separaten Zwischenwand und dem Ventilsitz zu einem einstückigen Teil technisch möglich. Zuvor war eine solche Integration aufgrund der unterschiedlichen verwendeten Materialien nicht denkbar.

Gemäß einer vorteilhaften Weiterbildung der Erfindung ist die kombinierte Zwischenwand-Ventilsitzeinrichtung in der Art eines druckluft-betätigbaren Kolbens aufgebaut. Dabei wirkt die kombinierte Zwischenwand-Ventilsitzeinrichtung von ihrer Funktion her zwar nicht als Kolben, kann aber aufgrund der genannten Weiterbildung mit den üblichen Konstruktionsmerkmalen von Druckluftkolben konstruiert werden. Eine solche Konstruktion erlaubt vorteilhaft ein technisch zuverlässiges und kostengünstiges Design der Zwischenwand-Ventilsitzeinrichtung basierend auf den Konstruktionserfahrungen mit Druckluftkolben.

Gemäß einer vorteilhaften Weiterbildung der Erfindung weist die kombinierte Zwischenwand-Ventilsitzeinrichtung eine umlaufende Innennut zur Aufnahme eines Lippendichtrings auf. Der Lippendichtring bewirkt vorteilhaft eine Abdichtung gegenüber dem Relaiskolben. Gemäß einer vorteilhaften Weiterbildung weist der Lippendichtring eine Lippendichtung auf, die in Druckluftströmungsrichtung von der relaiskolbenseitigen Kammer zur Relaisarbeitskammer Druckluft durchlässt und in entgegengesetzter Druckluftströmungsrichtung sperrt. Die Lippendichtung wirkt damit als pneumatisches Rückschlagventil. Mittels dieser Funktion ist ein schneller Abbau eines Überdrucks in der relaiskolbenseitigen Kammer möglich, indem die Druckluft von der relaiskolbenseitigen Kammer direkt, d.h. unter Umgehung der Einrichtung zum Druckausgleich, über die geöffnete Lippendichtung in die Relaisarbeitskammer strömt. Umgekehrt ist ein Druckaufbau in der relaiskolbenseitigen Kammer nur verzögert über die Einrichtung zum Druckausgleich in der Zwischenwand möglich, da in dieser Strömungsrichtung die Lippendichtung sperrt. Wie erkennbar ist, kann mittels des in dieser Art angeordneten Lippendichtrings auf einfache und kostengünstige Weise die Funktion einer Abdichtung gegenüber dem Relaiskolben sowie die Funktion eines Rückschlagventils realisiert werden. Hierdurch vereinfacht sich der Aufbau der erfindungsgemäßen Relaisventileinrichtung weiter, da kein zusätzliches, separates Rückschlagventil in der Einrichtung zum Druckausgleich in der Zwischenwand vorgesehen werden muss.

Gemäß einer vorteilhaften Weiterbildung der Erfindung weist die kombinierte Zwischenwand-Ventilsitzeinrichtung wenigstens eine umlaufende Nut am Außenumfang zur Aufnahme eines Dichtrings auf. Hierdurch kann eine besonders montagefreundliche Art der Abdichtung der Zwischenwand gegenüber dem Gehäuse der Relaisventileinrichtung vorgesehen werden. Es können als Dichtringe kostengünstige Standardbauteile, z. B. O-Ringe, eingesetzt werden.

Gemäß einer vorteilhaften Weiterbildung der Erfindung weist das Gehäuse der Relaisventileinrichtung eine Stufenbohrung auf, deren Durchmesser sich von der Seite der Arbeitsventileinrichtung stetig vergrößert. Hierdurch kann die erfindungsgemäße Relaisventileinrichtung besonders einfach und kostengünstig hergestellt werden. Eine Bearbeitung der Innenseite des Gehäuses kann von einer Gehäuseseite her erfolgen, da sich der Durchmesser auf der Innenseite stetig in einer Richtung hin verändert.

Gemäß einer vorteilhaften Weiterbildung der Erfindung ist die kombinierte Zwischenwand-Ventilsitzeinrichtung in dem Gehäuse der Relaisventileinrichtung durch ein Sicherungselement gegen eine Längsbewegung fixierbar. Hierdurch ergibt sich im Zusammenhang mit der kolbenartigen Konstruktion der kombinierten Zwischenwand-Ventilsitzeinrichtung ein weiter vereinfachter und hinsichtlich der Kosten günstigerer Aufbau der erfindungsgemäßen Relaisventileinrichtung gegenüber vorbekannten Relaisventileinrichtungen. Bei der Montage der erfindungsgemäßen Relaisventileinrichtung ist somit lediglich die kolbenartige Zwischenwand-Ventilsitzeinrichtung in das Gehäuse der Relaisventileinrichtung einzusetzen, das Sicherungselement ist anzubringen, sodann können die weiteren Bauteile wie der Relaiskolben eingesetzt werden. Die Dichtungsbauteile, wie der Lippendichtring und die äußeren Dichtringe, können vor dem Einsetzen der kombinierten Zwischenwand-Ventilsitzeinrichtung in das Gehäuse bereits an der kombinierten Zwischenwand-Ventilsitzeinrichtung vormontiert sein.

Das Sicherungselement ist vorteilhaft als Sicherungsring oder als Gehäusevorsprung ausgebildet. Vorteilhaft ist beispielsweise eine bajonettartige Fixierung der kombinierten Zwischenwand-Ventilsitzeinrichtung in dem Gehäuse der Relaisventileinrichtung.

Gemäß einer vorteilhaften Weiterbildung der Erfindung ist die Relaisventileinrichtung als Proportional-Relaisventil ausgebildet. Dies erlaubt besonders sensible Druckänderungen in den Bremszylindern druckluftgebremster Fahrzeuge, insbesondere in Verbindung mit einem elektronisch gesteuerten Bremssystem.

Die Erfindung umfasst ferner ein vorteilhaftes Anhängersteuerventil für ein druckluftgebremstes Fahrzeug. Das Anhängersteuerventil weist wenigstens ein Magnetventil, ein Abrisssicherungsventil und eine Relaisventileinrichtung der zuvor erläuterten Art auf. Das Magnetventil dient dabei zur Vorgabe eines Eingangsdrucks für die Relaisventileinrichtung, d. h. zur Beaufschlagung des Relaiskolbens. Solche Anhängersteuerventile kommen in Druckluftbremsanlagen von Nutzfahrzeugen zum Einsatz, die als Zugfahrzeug zum Ankoppeln eines Anhängefahrzeugs ausgebildet sind. Das Anhängersteuerventil dient dabei zur Übertragung von Bremsdrücken vom Zugfahrzeug zu dem Anhängefahrzeug. Üblicherweise werden zwei Bremsdrücke übertragen, nämlich ein Vorratsdruck aus einem Vorratsbehälter des Zugfahrzeugs sowie ein Steuerdruck, der den Bremswunsch des Fahrers repräsentiert. Das Abrisssicherungsventil des Anhängersteuerventils dient dazu, bei einem Defekt der pneumatischen Bremsleitung und zwischen dem Zugfahrzeug und dem Anhängefahrzeug den Vorratsdruck des Zugfahrzeugs gegen einen unerwünschten Druckverlust abzusichern.

Die Erfindung wird nachfolgend anhand eines Ausführungsbeispiels unter Verwendung einer Zeichnung weiter erläutert.

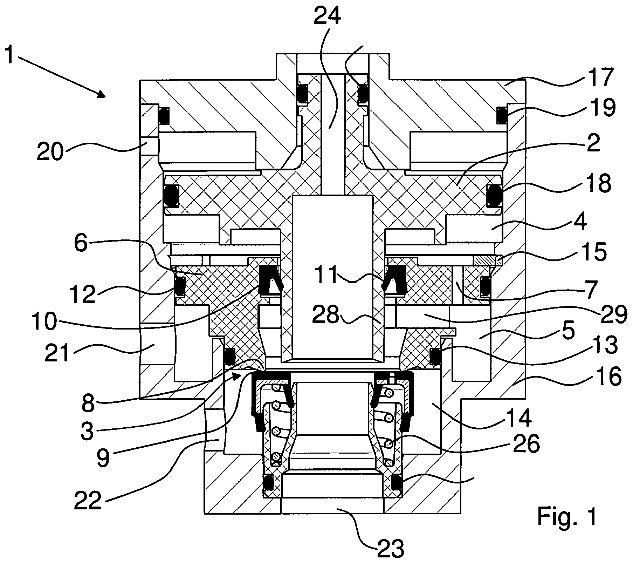

Die Fig. 1 zeigt eine erfindungsgemäße Relaisventileinrichtung 1 in Schnittdarstellung.

Die Relaisventileinrichtung 1 weist als Gehäuseteile einen Gehäusekörper 16 und eine Gehäuseverschlussplatte 17 auf. Die Gehäuseverschlussplatte 17 ist über eine Dichtung 19 gegenüber dem Gehäusekörper 16 abgedichtet. Innerhalb des Gehäusekörpers 16 ist eine Stufenbohrung 14 vorgesehen, innerhalb derer verschiedene innere Komponenten der Relaisventileinrichtung 1 angeordnet sind.

In der Stufenbohrung 14 ist ein Relaiskolben 2 angeordnet, der über eine Dichtung 18 gegenüber dem Gehäusekörper 16 abgedichtet ist. An dem dem Relaiskolben 2 gegenüberliegenden Ende des Gehäusekörpers 16 ist eine Arbeitsventileinrichtung 3 angeordnet. Die Arbeitsventileinrichtung 3 weist eine in Richtung zum Relaiskolben 2 weisende Ventilschließfläche 9 auf. Ein die Ventilschließfläche 9 tragendes Teil wird über eine Feder 26 gegenüber einem in dem Gehäusekörper 16 befestigten Trägerteil der Arbeitsventileinrichtung 3 abgefedert.

Zwischen dem Relaiskolben 2 und der Arbeitsventileinrichtung 3 ist eine Auslasskammer 4, 5 vorgesehen. Die Auslasskammer 4, 5 wird durch eine in der Auslasskammer 4, 5 angeordnete Zwischenwand 6 in eine relaiskolbenseitige Kammer 4 und eine Relaiskolben-abgewandte Relaisarbeitskammer 5 geteilt.

Die Relaisventileinrichtung 1 weist als pneumatische Anschlüsse einen Druckluftsteuereingang 20, einen Druckluftauslassanschluss 21 und einen Druckluftvorratsanschluss 22 auf. Ferner sind Entlüftungsanschlüsse 23, 24 vorgesehen. Der Druckluftsteuereingang 20 dient zur Zuführung von Steuerdruck, z. B. von einem elektronisch gesteuerten Bremssystem. Der Steuerdruck wird auf eine Steuerfläche des Relaiskolbens 2 geführt, die sich auf der der relaiskolbenseitigen Kammer 4 abgewandten Seite des Relaiskolbens 2 befindet. Hierdurch wird der Relaiskolben 2 in Richtung zu der Arbeitsventileinrichtung 3 ausgelenkt und betätigt bei entsprechender Druckbeaufschlagung die Arbeitsventileinrichtung 3, so dass die Arbeitsventileinrichtung 3 öffnet. Der Druckluftvorratsanschluss 22 dient zum Anschluss eines Vorratsdrucks, z. B. von einem Druckluftvorratsbehälter des Zugfahrzeugs. Der von der Relaisventileinrichtung 1 erzeugte Ausgangsdruck, der z. B. einem Bremszylinder zugeführt werden soll, kann an dem Druckluftauslassanschluss 21 entnommen werden. Die Entlüftungsanschlüsse 23, 24 dienen zur Entlüftung überschüssiger Druckluft und sind daher mit der Atmosphäre verbunden.

Die Arbeitsventileinrichtung 3 hat die Funktion eines proportional wirkenden 3/2-Wegeventils. In einer Schließstellung, wie in der Fig. 1 dargestellt, sperrt die Arbeitsventileinrichtung 3 den Druckluftauslassanschluss 21 gegenüber dem Druckluftvorratsanschluss 22 ab. In dieser Stellung ist der Druckluftauslassanschluss 21 über einen Kanal 29 mit dem Entlüftungsanschluss 23 verbunden. In einer Öffnungsstellung verbindet die Arbeitsventileinrichtung 3 den Druckluftauslassanschluss 21 mit dem Druckluftvorratsanschluss 22, wobei die Größe des Öffnungsquerschnitts variierbar ist. In dieser Stellung ist zugleich der Entlüftungsanschluss 23 abgesperrt.

Die Zwischenwand 6 ist einstückig als ein Bauteil mit einem Ventilsitz 8 der Arbeitsventileinrichtung 3 als kombinierte Zwischenwand-Ventilsitzeinrichtung 6, 7, 8 ausgeführt. Der Ventilsitz 8 ist derart angeordnet, dass er zur Anlage mit der Ventilschließfläche 9 kommen kann, so dass die Arbeitsventileinrichtung 3 in der Schließstellung ist. Die Schließstellung wird durch die Kraft der Feder 26 unterstützt. Ein Öffnen der Arbeitsventileinrichtung 3 erfolgt durch eine Druckluftbetätigung des Relaiskolbens 2 über den Druckluftsteuereingang 20. Der Relaiskolben 2 wird dadurch in Richtung zu der Arbeitsventileinrichtung 3 hin bewegt. Dann kommt ein länglicher Fortsatz 28 des Relaiskolbens 2 mit der Ventilschließfläche 9 zur Anlage und bewegt die Ventilschließfläche 9 entgegen der Kraft der Feder 26 von dem Ventilsitz 8 fort. Hierdurch wird die Arbeitsventileinrichtung 3 in die Öffnungsstellung gebracht, wodurch eine Druckluftströmung durch den freiwerdenden Ringspalt zwischen dem Ventilsitz 8 und der Ventilschließfläche 9 ermöglicht wird. Je nach Auslenkung des Relaiskolbens 2 wird der Strömungsquerschnitt des Ringspalts verändert. In diesem Zustand liegt zugleich der Fortsatz 28 des Relaiskolbens 2 an der Ventilschließfläche 9 an, wodurch der Entlüftungsanschluss 23 abgesperrt ist.

Die Zwischenwand 6 weist eine Einrichtung 7 zum Druckausgleich zwischen der relaiskolbenseitigen Kammer 4 und der Relaisarbeitskammer 5 auf. Die Einrichtung 7 zum Druckausgleich kann z. B. als Bohrung, Kanal, Drossel oder Blende ausgebildet sein. Denkbar ist auch das Vorsehen eines Rückschlagventils an der Einrichtung 7 zum Druckausgleich.

Statt eines separaten Rückschlagventils ist es vorteilhaft, einen Lippendichtring 10 in einer umlaufenden Innennut der kombinierten Zwischenwand-Ventilsitzeinrichtung 6, 7, 8 vorzusehen. Vorteilhaft ist der Lippendichtring derart in der Innennut angeordnet, dass die Lippendichtung 11 des Lippendichtrings 10 in Richtung zu der Arbeitsventileinrichtung 3 weist, d. h., dass die Lippendichtung 11 eine Druckluftströmung in Richtung von der relaiskolbenseitigen Kammer 4 zu der Relaisarbeitskammer 5 hin durchlässt und eine Druckluftströmung in entgegengesetzter Richtung sperrt. Die Lippendichtung 11 wirkt damit als Rückschlagventil. Der Lippendichtring kann vorteilhaft als Nutring ausgeführt sein. Hierdurch kann ein auf dem Markt verfügbares Standardbauteil verwendet werden.

In umlaufenden Nuten am Außenumfang der kombinierten Zwischenwand-Ventilsitzeinrichtung 6, 7, 8 sind Dichtringe 12, 13 vorgesehen, die die kombinierte Zwischenwand-Ventilsitzeinrichtung gegenüber dem Gehäuseteil 16 abdichten. Die Dichtringe 12, 13 können z. B. als O-Ringe ausgebildet sein.

Die kombinierte Zwischenwand-Ventilsitzeinrichtung 6, 7, 8 wird durch einen Sicherungsring 15, der z. B. als Sprengring ausgebildet sein kann, hinsichtlich ihrer Lage fixiert. Hierdurch wird eine unerwünschte Längsbeweglichkeit der kombinierten Zwischenwand-Ventilsitzeinrichtung 6, 7, 8 in dem Gehäuse der Relaisventileinrichtung 1 unterbunden.

## Patentansprüche

1. Relaisventileinrichtung (1) mit einem Gehäuse (16, 17), einem in dem Gehäuse (16, 17) angeordneten längsbeweglichen Relaiskolben (2), einer von dem Relaiskolben (2) betätigbaren Arbeitsventileinrichtung (3), einer Auslasskammer (4, 5) zwischen dem Relaiskolben (2) und der Arbeitsventileinrichtung (3) und einer in der Auslasskammer (4, 5) angeordneten Zwischenwand (6), die die Auslasskammer (4, 5) in eine relaiskolbenseitige Kammer (4) und eine Relaiskolben-abgewandte Relaisarbeitskammer (5) teilt, wobei die Arbeitsventileinrichtung (3) in der Relaisarbeitskammer (5) an einem dem Relaiskolben (2) gegenüberliegenden Ende des Gehäuses (16) angeordnet ist, und wobei die Zwischenwand (6) eine Einrichtung (7) zum Druckausgleich zwischen der relaiskolbenseitigen Kammer (4) und der Relaisarbeitskammer (5) aufweist, **dadurch gekennzeichnet, dass** die Zwischenwand (6) zusammen mit einem Ventilsitz (8) der Arbeitsventileinrichtung (3) einstückig als kombinierte Zwischenwand-Ventilsitzeinrichtung (6, 7, 8) ausgebildet und als Kunststoffteil hergestellt ist.

2. Relaisventileinrichtung nach Anspruch 1, **dadurch gekennzeichnet, dass** die kombinierte Zwischenwand-Ventilsitzeinrichtung (6, 7, 8) in der Art eines Druckluft-betätigbaren Kolbens aufgebaut ist.

3. Relaisventileinrichtung nach wenigstens einem der vorhergehenden Ansprüche, **dadurch gekennzeichnet, dass** die kombinierte Zwischenwand-Ventilsitzeinrichtung (6, 7, 8) eine umlaufende Innennut zur Aufnahme eines Lippendichtrings (10) aufweist.

4. Relaisventileinrichtung nach Anspruch 3, **dadurch gekennzeichnet, dass** der Lippendichtring (10) eine in Druckluftströmungsrichtung von der relaiskolbenseitigen Kammer (4) zur Relaisarbeitskammer (5) Druckluft-durchlassende und in entgegengesetzter Druckluftströmungsrichtung sperrende Lippendichtung (11) aufweist.

5. Relaisventileinrichtung nach wenigstens einem der vorhergehenden Ansprüche, **dadurch gekennzeichnet, dass** die kombinierte Zwischenwand-Ventilsitzeinrichtung (6, 7, 8) wenigstens eine umlaufende Nut am Außenumfang zur Aufnahme eines Dichtrings (12, 13) aufweist.

6. Relaisventileinrichtung nach wenigstens einem der vorhergehenden Ansprüche, **dadurch gekennzeichnet, dass** das Gehäuse (16, 17) der Relaisventileinrichtung (1) eine Stufenbohrung (14) aufweist, deren Durchmesser sich von der Seite der Arbeitsventileinrichtung (3) aus stetig vergrößert.

7. Relaisventileinrichtung nach wenigstens einem der vorhergehenden Ansprüche, **dadurch gekennzeichnet, dass** die kombinierte Zwischenwand-Ventilsitzeinrichtung (6, 7, 8) in dem Gehäuse (16, 17) der Relaisventileinrichtung (1) durch ein Sicherungselement (15) gegen eine Längsbewegung fixierbar ist.

8. Relaisventileinrichtung nach Anspruch 7, **dadurch gekennzeichnet, dass** das Sicherungselement (15) als Sicherungsring oder als Gehäusevorsprung ausgebildet ist.

9. Relaisventileinrichtung nach wenigstens einem der vorhergehenden Ansprüche, **dadurch gekennzeichnet, dass** die Relaisventileinrichtung (1) als Proportional-Relaisventil ausgebildet ist.

10. Anhängersteuerventil für ein druckluftgebremstes Fahrzeug, wobei das Anhängersteuerventil wenigstens ein Magnetventil, ein Abrisssicherungsventil und eine Relaisventileinrichtung (1) nach wenigstens einem der vorhergehenden Ansprüche aufweist.

## Claims

1. Relay valve device (1) with a housing (16, 17), with a longitudinally movable relay piston (2) arranged in the housing (16, 17), with a working valve device (3) actuable by the relay piston (2), with an outlet chamber (4, 5) between the relay piston (2) and the working valve device (3) and with an intermediate wall (6) which is arranged in the outlet chamber (4, 5) and divides the outlet chamber (4, 5) into a relay piston-side chamber (4) and a relay piston-remote relay working chamber (5), the working valve device (3) being arranged in the relay working chamber (5) at an end of the housing (16) which lies opposite the relay piston (2), and the intermediate wall (6) having a device (7) for pressure equalization between the relay piston-side chamber (4) and the relay working chamber (5), **characterized in that** the intermediate wall (6) is designed, together with a valve seat (8) of the working valve device (3), in one piece as a combined intermediate-wall/valve-seat device (6, 7, 8) and is produced as a plastic part.

2. Relay valve device according to Claim 1, **characterized in that** the combined intermediate-wall/valve-seat device (6, 7, 8) is set up in the manner of a piston actuable by compressed air.

3. Relay valve device according to at least one of the preceding claims, **characterized in that** the combined intermediate-wall/valve-seat device (6, 7, 8) has a peripheral inner groove for receiving a lip sealing ring (10).

4. Relay valve device according to Claim 3, **characterized in that** the lip sealing ring (10) has a lip seal (11) admitting compressed air in the compressed-air flow direction from the relay piston-side chamber (4) to the relay working chamber (5) and shutting off compressed air in the opposite compressed-air flow direction.

5. Relay valve device according to at least one of the preceding claims, **characterized in that** the combined intermediate-wall/valve-seat device (6, 7, 8) has at least one peripheral groove on the outer circumference for receiving a sealing ring (12, 13).

6. Relay valve device according to at least one of the preceding claims, **characterized in that** the housing (16, 17) of the relay valve device (1) has a stepped bore (14), the diameter of which increases continuously from the side of the working valve device (3).

7. Relay valve device according to at least one of the preceding claims, **characterized in that** the combined intermediate-wall/valve-seat device (6, 7, 8) can be fixed in the housing (16, 17) of the relay valve device (1) against longitudinal movement by means of a securing element (15).

8. Relay valve device according to Claim 7, **characterized in that** the securing element (15) is designed as a securing ring or as a housing projection.

9. Relay valve device according to at least one of the preceding claims, **characterized in that** the relay valve device (1) is designed as a proportional relay valve.

10. Trailer control valve for a vehicle braked by compressed air, the trailer control valve having at least one solenoid valve, one break-off protection valve and one relay valve device (1) according to at least one of the preceding claims.

## Revendications

1. Dispositif de valve-relais (1) comprenant un boîtier (16, 17), un piston-relais (2) déplaçable longitudinalement, disposé dans le boîtier (16, 17), un dispositif de valve de travail (3) pouvant être actionné par le piston-relais (2), une chambre de sortie (4, 5) entre le piston-relais (2) et le dispositif de valve de travail (3) et une paroi intermédiaire (6) disposée dans la chambre de sortie (4, 5), qui divise la chambre de sortie (4, 5) en une chambre (4) du côté du piston-relais et une chambre de travail-relais (5) opposée au piston-relais, le dispositif de valve de travail (3) étant disposé dans la chambre de travail-relais (5) au niveau d'une extrémité du boîtier (16) opposée au piston-relais (2), et la paroi intermédiaire (6) présentant un dispositif (7) pour équilibrer la pression entre la chambre (4) du côté du piston-relais et la chambre de travail-relais (5), **caractérisé en ce que** la paroi intermédiaire (6), conjointement avec un siège de valve (8) du dispositif de valve de travail (3), est réalisée d'une seule pièce sous forme de dispositif de siège de valve-paroi intermédiaire combiné (6, 7, 8) et est fabriquée sous forme de pièce en plastique.

2. Dispositif de valve-relais selon la revendication 1, **caractérisé en ce que** le dispositif de siège de valve-paroi intermédiaire combiné (6, 7, 8) est construit à la manière d'un piston à commande par air comprimé.

3. Dispositif de valve-relais selon au moins l'une des revendications précédentes, **caractérisé en ce que** le dispositif de siège de valve-paroi intermédiaire combiné (6, 7, 8) présente une rainure interne périphérique pour recevoir une bague d'étanchéité à lèvre (10).

4. Dispositif de valve-relais selon la revendication 3, **caractérisé en ce que** la bague d'étanchéité à lèvre (10) présente un joint d'étanchéité à lèvre (11) laissant passer l'air comprimé dans la direction d'écoulement de l'air comprimé depuis la chambre (4) du côté du piston-relais à la chambre de travail-relais (5) et le bloquant dans la direction opposée d'écoulement de l'air comprimé.

5. Dispositif de valve-relais selon au moins l'une des revendications précédentes, **caractérisé en ce que** le dispositif de siège de valve-paroi intermédiaire combiné (6, 7, 8) présente au moins une rainure périphérique au niveau de la périphérie extérieure, pour recevoir une bague d'étanchéité (12, 13).

6. Dispositif de valve-relais selon au moins l'une des revendications précédentes, **caractérisé en ce que** le boîtier (16, 17) du dispositif de valve-relais (1) présente un alésage étagé (14) dont le diamètre augmente de manière continue depuis le côté du dispositif de valve de travail (3).

7. Dispositif de valve-relais selon au moins l'une des revendications précédentes, **caractérisé en ce que** le dispositif de siège de valve-paroi intermédiaire combiné (6, 7, 8) peut être fixé dans le boîtier (16, 17) du dispositif de valve-relais (1) par un élément de fixation (15) pour l'empêcher de se déplacer longitudinalement.

8. Dispositif de valve-relais selon la revendication 7, **caractérisé en ce que** l'élément de fixation (15) est réalisé sous forme de bague de fixation ou sous forme de saillie de boîtier.

9. Dispositif de valve-relais selon au moins l'une des revendications précédentes, **caractérisé en ce que** le dispositif de valve-relais (1) est réalisé sous forme de valve-relais proportionnelle.

10. Valve de commande de remorque pour un véhicule freiné par air comprimé, la valve de commande de remorque présentant au moins une électrovanne, une valve de coupure en cas de rupture et un dispositif de valve-relais (1) selon au moins l'une des revendications précédentes.
